# EUROPÄISCHE PATENTANMELDUNG

(11) **EP 2 614 943 A1**
(43) Veröffentlichungstag der Anmeldung: **17.07.2013**
(21) Anmeldenummer: 12151252.9
(22) Anmeldetag: 16.01.2012
(51) Int. Cl.: B29C 44/46

(54) **Vorrichtung zum Auftragen eines aufschäumenden Reaktionsgemisches**

(71) Anmelder: Bayer Intellectual Property GmbH, 40789 Monheim (DE)
(72) Erfinder: Die Erfindernennung liegt noch nicht vor
(74) Vertreter: BIP Patents

(57) **Zusammenfassung**

Die vorliegende Erfindung betrifft eine Vorrichtung (100) zum Auftragen eines aufschäumenden Reaktionsgemisches (600) auf eine Deckschicht (500), insbesondere zur Herstellung eines Verbundelementes, mindestens umfassend zwei Gießharken (200, 260) mit jeweils einem rohrförmigen Hohlkörper (210), welcher Hohlkörper (210) sich entlang einer Mittelachse (250) erstreckt und wenigstens zwei Austrittsöffnungen (220) zum Austritt des aufschäumenden Reaktionsgemisches (600) aufweist, wobei die Gießharken (200, 260) und die Deckschicht (500) in einer Längsachse (510) relativ zueinander bewegbar sind und wobei die Gießharken (200, 260) an einem Aufnahmeelement (700) angeordnet sind. Erfindungsgemäß ist vorgesehen, dass die Anordnung der Gießharken (200, 260) am Aufnahmeelement (700) jeweils ein Gelenk (805) aufweist, mittels dem die Gießharken (200, 260) beweglich am Aufnahmeelement (700) angeordnet sind und in einem Winkel (400, 410) von ≤ 80° zur Längsachse (510) der Bewegung ausrichtbar sind.

## Beschreibung

Die Erfindung betrifft eine Vorrichtung zum Auftragen eines aufschäumenden Reaktionsgemisches auf eine Deckschicht insbesondere zur Herstellung eines Verbundelementes. Darüber hinaus betrifft die Erfindung ein Verfahren zur Herstellung von PUR/PIR-Schaum haltigen Verbundelementen.

### STAND DER TECHNIK

Verbundelemente aus einer Deckschicht und einem Isolierkern werden heutzutage in vielen Industriebereichen eingesetzt. Der grundlegende Aufbau solcher Verbundelemente besteht dabei aus einer Deckschicht, auf welche ein isolierend wirkender Werkstoff aufgebracht wird. Als Deckschichten können dabei beispielsweise Bleche aus beschichtetem Stahl, Edelstahl, Aluminium, Kupfer oder Legierungen der beiden letztgenannten Materialien eingesetzt werden. Darüber hinaus können aber auch Kunststoffplatten oder -folien, Aluminiumfolien, Glasfaser- oder Mineralfaservliese sowie cellulosehaltige Materialien wie Papier, Pappe oder Pappmaschee als Deckschichtmaterialien eingesetzt werden. Die Wahl des geeigneten Deckschichtmaterials hängt dabei von dem beabsichtigten Einsatzgebiet der Verbundelemente und den sich daraus ergebenden Materialanforderungen ab. Als Isolierkern können insbesondere Schaumstoffe auf Basis von Polyurethan (PUR) und/oder Polyisocyanurat (PIR) eingesetzt werden.

Neben der Verwendung solcher Verbundelemente zur Isolierung von beispielsweise Kühlhäusern finden diese auch immer häufiger Anwendung als Fassadenelemente an Gebäuden oder als Elemente von Industrietüren oder beispielsweise Sektionaltore. Entsprechende Verbundelemente, im Folgenden auch als Sandwich-Elemente bezeichnet, zeigen durch ihre Deckschicht eine dem verwendeten Material entsprechende Stabilität und Oberflächengestaltung, während der aufgebrachte Schaumstoff entsprechende wärmeisolierende Eigenschaften ermöglicht.

Zur Herstellung entsprechender Verbundelemente wird auf eine bereitgestellte Deckschicht ein schäumendes Reaktionsgemisch mittels einer Auftragsvorrichtung aufgebracht. Hierzu werden zum Beispiel bei der Verwendung von Schaumstoffen auf Basis von Isocyanaten die entsprechenden Polyol-Komponenten und Isocyanat-Komponenten miteinander gemischt und auf die Deckschicht aufgetragen, auf welcher sie aufschäumen und aushärten.

Als Auftragsvorrichtung zur Aufbringung des schäumenden Reaktionsgemisches auf die Deckschicht kommen häufig rohrförmige Hohlkörper zum Einsatz, welche entlang ihrer Längserstreckung mit einer Mehrzahl von Austrittsöffnungen versehen sind, aus welchen das in das Rohr eingebrachte Reaktionsgemisch austreten kann. Solche Rohre werden üblicherweise als Gießharken bezeichnet. Um eine möglichst gleichmäßige Verteilung des schäumenden Reaktionsgemisches auf der Deckschicht zu erreichen, sind die Austrittsöffnungen entsprechend optimiert über der Längserstreckung der Gießharke verteilt. Um wiederum eine optimierte Verteilung des schäumenden Reaktionsgemisches entlang der Längserstreckung der Deckschicht zu erreichen, kann entweder die Gießharke oszillierend über die Deckschicht bewegt werden oder die Gießharke ist ortsfest montiert und die Deckschicht wird unter der Gießharke bewegt. Dies kann sowohl in kontinuierlicher als auch in diskontinuierlicher Weise erfolgen.

So offenbart beispielsweise die WO 2009/077490 A1 ein Verfahren zur Herstellung von Verbundkörpern, bestehend aus mindestens einer Deckschicht und einem Hartschaumstoff auf Isocyanatbasis, wobei die Deckschicht kontinuierlich bewegt wird und das Ausgangsmaterial für den Hartschaumstoff auf Isocyanatbasis auf die Deckschicht aufgebracht wird, wobei der Auftrag des flüssigen Ausgangsmaterials für den Hartschaumstoff auf Isocyanatbasis mittels mindestens einem feststehenden, parallel zur Deckschichtenebene und rechtwinklig zur Bewegungsrichtung zur Deckschicht angebrachten, mit Öffnungen versehenen Rohre erfolgt.

WO 2008/018787 A1 offenbart eine Vorrichtung zur Aufbringung einer viskosen Mischung auf eine Oberfläche mittels einer oder mehrerer Auslassöffnungen, wobei der Vorrichtung die viskose Mischung mittels einer rohrförmigen Zuführvorrichtung zugeführt wird.

Das deutsche Gebrauchsmuster DE 20 2011 001 109 U1 offenbart eine Vorrichtung zum Auftrag von flüssigen Reaktionsgemischen auf eine Deckschicht, wobei die Deckschicht kontinuierlich bewegt wird und das flüssige Reaktionsgemisch auf die Deckschicht aufgebracht wird, bestehend aus mindestens einem Rohr, das mit Öffnungen in Richtung der Deckschicht versehen ist, und welches oberhalb der Deckschicht parallel zur Deckschichtenebene und rechtwinklig zur Bewegungsrichtung der Deckschicht angebracht ist, wobei die äußeren Öffnungen an der Seite des Rohres, die sich über dem Rand der Deckschicht befindet, in einem Winkel von 1° bis 50° in Richtung des Randes der Deckschicht angebracht sind.

Das Deutsche Gebrauchsmuster DE 20 2009 015 838 U1 offenbart eine Vorrichtung zum Auftrag von flüssigen Reaktionsgemischen auf eine Deckschicht, wobei die Deckschicht kontinuierlich bewegt wird und das flüssige Reaktionsgemisch auf die Deckschicht aufgebracht wird, wobei die Vorrichtung mindestens ein mit Öffnungen versehenes Rohr ist, wobei das Rohr aus Kunststoff besteht.

Die bekannten Formen der Gießharken können zu dem Nachteil führen, dass abhängig von der Form und Führung der Deckschicht relativ zur Gießharke eine gleichmäßige Verteilung des Reaktionsgemisches nicht vorteilhaft möglicht ist. Insbesondere in den Seitenbereichen der Deckschicht selbst oder bei auf der Deckschicht vorhandenen Befestigungselementen ist eine gleichmäßige Verteilung des Reaktionsgemisches beispielsweise in den Seitenbereichen der Befestigungselemente nicht gewährleistet.

### OFFENBARUNG DER ERFINDUNG

Es ist daher die Aufgabe der vorliegenden Erfindung eine verbesserte Vorrichtung zur Herstellung von Verbundelementen aus einer Deckschicht und einer darauf aufgebrachten Schaumstoffschicht anzugeben, welche insbesondere eine verbesserte Auftragung eines den Schaumstoff ausbildenden schäumenden Reaktionsgemisches erlaubt.

Gelöst wird diese Aufgabe durch eine Vorrichtung zum Auftragen eines aufschäumenden Reaktionsgemisches auf eine Deckschicht, insbesondere zur Herstellung eines Verbundelementes, mindestens umfassend zwei Gießharken mit jeweils einem rohrförmigen Hohlkörper, welcher Hohlkörper sich entlang einer Mittelachse erstreckt und wenigstens zwei Austrittsöffnungen zum Austritt des aufschäumenden Reaktionsgemisches aufweist, wobei die Gießharken und die Deckschicht in einer Längsachse relativ zueinander bewegbar sind und wobei die Gießharken an einem Aufnahmeelement angeordnet sind und es ist erfindungsgemäß vorgesehen, dass die Anordnung der Gießharken am Aufnahmeelement jeweils ein Gelenk aufweist, mittels dem die Gießharken beweglich am Aufnahmeelement angeordnet sind und in einem Winkel von < 80° zur Längsachse der Bewegung ausrichtbar sind.

Es hat sich überraschenderweise gezeigt, dass mit einer beweglichen Anordnung der Gießharken beispielsweise ein Winkel ≤ 80° zur Längsachse auch Verbundelemente mit einer komplizierten Geometrie besser hergestellt werden können. Zum Beispiel ist es möglich, im Fall einer verdeckten Befestigung des Verbundelementes, wie sie beispielsweise bei Fassadenelementen vorgesehen wird, eine verbesserte Materialverteilung des Schaumstoffes auf der Deckschicht in den Seitenbereichen zu gewährleisten. Ein weiterer Vorteil ergibt sich bei der Herstellung von Sicken aufweisenden Verbundelementen, welche Sicken insbesondere ein Wellenprofil bilden, wie sie beispielsweise bei Dachprofilen eingesetzt werden. Hier führt die winkelige Anordnung der Gießharke zu einem optimierten Auftrag des schäumenden Reaktionsgemisches in den Sicken.

Gemäß einer bevorzugten Ausgestaltung der Erfindung ist das Aufnahmeelement durch einen Mischkopf insbesondere mit einem 3-Wege-Stück gebildet ist, wobei im Mischkopf wenigstens zwei Komponenten zur Bildung des aufschäumenden Reaktionsgemisches zusammenführbar sind.

Ferner ist mit Vorteil vorgesehen, dass das Gelenk insbesondere als Kugelgelenk zwischen dem 3-Wege-Stück und den Gießharken ausgebildet ist, derart, dass die Gießharken mechanisch bewegbar über das 3-Wege-Stück am Mischkopf angeordnet und fluidisch mit dem Mischkopf verbunden sind.

Durch die Verwendung eines flexiblen Gelenkes kann die Gießharke beispielsweise in einem Winkel <90° und bevorzugt ≤ 80° zur Längsachse der Bewegung der Deckschicht oder der Vorrichtung ausgerichtet werden. Ebenso ist es durch die Verwendung eines flexiblen Gelenkes möglich, die Gießharke in einem von der Horizontalen abweichenden Winkel auszurichten, wodurch die Gießharke antiparallel zur Ebene der Deckschicht ausgerichtet werden kann. Auch ist es möglich, die Austrittsöffnungen der Gießharke und somit den Austrittswinkel des schäumenden Reaktionsgemisches flexibel zur orthogonal zur Ebene der Deckschicht stehenden Achse auszurichten, so dass das schäumende Reaktionsgemisch in einem wählbaren Auftreffwinkel auf die Deckschicht auftrifft.

Grundsätzlich wird zum Auftrag eines aufschäumenden Reaktionsgemisches die Deckschicht unter den Gießharken hinwegbewegt, beispielsweise kontinuierlich als endlose Materialbahn. Die aufgeführte relativ zueinander vorgesehene Bewegung zwischen den Gießharken und der Deckschicht kann im Sinne der vorliegenden Erfindung jedoch auch dann erzeugt werden, wenn die Gießharken über einer ruhenden Deckschicht hinwegbewegt werden oder wenn sowohl die Gießharken als auch die Deckschicht bewegt werden.

Unter dem Begriff "rohrförmig" ist im Sinne der Erfindung jede geeignete Hohlprofilform zu verstehen. Insbesondere sind dabei Hohlprofile mit einem runden, elliptischen oder eckigen Profilquerschnitt sowie konisch verlaufende Hohlprofile umfasst.

Es hat sich überraschenderweise gezeigt, dass mit einer Anordnung der Gießharke in einem Winkel ≤ 80° auch Verbundelemente mit einer komplizierten bzw. asymmetrischen Geometrie besser hergestellt werden können. Eine solche Ausrichtung der Gießharken zur Deckschicht wird durch eine fluidische Anbindung der Gießharken über ein 3-Wege-Stück mittels flexibler Gelenksverbindungen in vorteilhafter Weise möglich. Das flexible Gelenk, welches vorzugsweise durch ein Kugelgelenk gebildet wird, erlaubt dabei eine Ausrichtung der Gießharken in drei Freiheitsgraden, wodurch die Gießharke in vorteilhafter Weise derart zur Deckschichtebene ausgerichtet werden kann, dass das schäumende Reaktionsgemisch optimiert auf die Deckschicht aufgetragen werden kann.

Zum Beispiel ist es möglich, im Fall einer verdeckten Befestigung der Verbundelemente, wie diese beispielsweise bei Fassadenelementen vorgesehen wird, eine verbesserte Materialverteilung des Schaumstoffes auf der Deckschicht in den Seitenbereichen zu gewährleisten. Ein weiterer Vorteil ergibt sich bei der Herstellung von Verbundelementen mit Sicken, welche insbesondere ein Wellenprofil bilden und wie diese beispielsweise als Dachprofile eingesetzt werden. Hier führt die winkelige Anordnung der Gießharke zu einem optimierten Auftrag des schäumenden Reaktionsgemisches in den Sicken.

In einer weiteren Ausgestaltung der erfindungsgemäßen Vorrichtung kann vorgesehen sein, dass der Betrag der Winkel, in denen die Gießharken zur Bewegungsrichtung der Deckschicht ausgerichtet sind, unterschiedlich ist, so dass die beiden Gießharken in der Form eines unsymmetrischen V zueinander angeordnet sind. Hierdurch ist es beispielsweise möglich, dass im Fall einer verdeckten Befestigung des Verbundelementes, wie diese beispielsweise bei Fassadenelementen vorgesehen wird, eine verbesserte Materialverteilung des Schaumstoffes auf der Deckschicht in den Seitenbereichen gewährleistet wird und mehr Material in die lange Nase des Profils zugeführt wird. Ein weiterer Vorteil ergibt sich bei der Herstellung von Sicken aufweisenden Verbundelementen, wie diese beispielsweise als Dachprofile eingesetzt werden. Hier führt die asymmetrische Anordnung der Gießharken zu einem optimierten Auftrag des schäumenden Reaktionsgemisches in den Sicken.

In einer weiteren Ausgestaltung der Vorrichtung ist an der Zuführung der Gießharken für das schäumende Reaktionsgemisch eine Kugelgelenkspfanne und an dem 3-Wege-Stück ein mit der Kugelgelenkspfanne korrespondierender Kugelgelenkskopf ausgebildet. Alternativ kann vorgesehen sein, dass an der Zuführung der Gießharke für das schäumende Reaktionsgemisch ein Kugelgelenkskopf ausgebildet und dass an dem 3-Wege-Stück eine mit dem Kugelgelenkskopf korrespondierende Kugelgelenkspfanne ausgebildet ist. Insbesondere die Gießharken können eine Zuführung aufweisen, welche Zuführungen jeweils einen Teil des Kugelgelenks, insbesondere eine Kugelgelenkspfanne, aufweisen, und wobei am 3-Wege-Stück mit der Kugelgelenkspfanne korrespondierende Kugelgelenksköpfe ausgebildet sind.

In einer weiteren Ausgestaltung der erfindungsgemäßen Vorrichtung sind die Gießharken über das Kugelgelenk in einem Winkel zwischen ≥ 60° und ≤ 80° zur Längsachse der Bewegung ausrichtbar. Die beiden Gießharken sind somit V-förmig symmetrisch oder asymmetrisch zueinander anordbar und schließen zueinander einen Winkel zwischen ≥ 120° und ≤ 160° ein. Dies erlaubt insbesondere ein gutes Ausschäumen der Deckschicht auch in den Randbereichen bei einer komplizierten bzw. asymmetrischen Profilgeometrie der Deckschicht, wie diese beispielsweise bei Verbundelementen mit verdeckten Befestigungen auftreten.

Weiter bevorzugt kann vorgesehen sein, dass der Kugelgelenkskopf und die Kugelgelenkspfanne über ein Kupplungselement fluiddicht lösbar miteinander verbunden sind. Fluiddicht bedeutet in diesem Zusammenhang, dass die beiden Gelenkelemente derart gegeneinander gepresst werden, dass das durch das sich ausbildende Kugelgelenk strömende und schäumende Reaktionsgemisch nicht zwischen Gelenkpfanne und -kopf austreten kann. Lösbar bedeutet in diesem Zusammenhang, dass das Kupplungselement derart ausgestaltet ist, dass das sich ausbildende Kugelgelenk geöffnet werden kann, um so die Gießharke und/oder das 3-Wege-Stück im Bedarfsfall auswechseln zu können.

Vorzugsweise kann es vorgesehen sein, dass als Kupplungselement eine Schraubklammer oder eine Federklammer vorgesehen wird. Bei einer Schraubklammer wird mittels einer Gewindestande, die in ein entsprechendes Gewindeelement eingreift, eine Klemmkraft auf die beiden Gelenkelemente des Kugelgelenks ausgeübt, die so aneinander gepresst werden. Bei der Verwendung einer Federklammer wird eine entsprechende Klemmkraft über ein Federelement aufgebracht.

Gemäß einer weiteren Ausgestaltung der erfindungsgemäßen Vorrichtung weisen der Kugelgelenkskopf und/oder die Kugelgelenkspfanne eine Dichtfläche auf, welche eine fluiddichte Verbindung zwischen Kugelgelenkspfanne und Kugelgelenkskopf gewährleistet. Dichtfläche bedeutet in diesem Zusammenhang, dass zumindest die Berührungsflächen zwischen der Gelenkpfanne und dem Gelenkkopf derart eingerichtet sind, dass sich eine optimierte Dichtigkeit zwischen den Gelenkelementen bei Anlegen der Klemmkraft durch das Kupplungselement einstellt. Hierzu kann es vorgesehen sein, dass die Berührungsflächen in geeigneter Weise oberflächenbehandelt oder mit elastischem Dichtmaterial ausgerüstet sind. Alternativ kann das Gelenk auch als nur mechanisch wirkendes Verbindungsmittel ausgeführt sein und die Fluidverbindung der Gießharken mit dem Mischkopf ist durch unabhängig vom mechanisch ausgeführten Gelenk über beispielsweise eine Schlauchverbindung hergestellt.

Die an der Gießharke angeordnete Zuführung und/oder das Gelenkelement können integraler Bestandteil der Gießharke sein. Hierzu kann die Gießharke samt Zuführung und/oder Gelenkelement beispielsweise als Spritzgussteil gefertigt sein. Ebenso können die am 3-Wege-Stück vorgesehenen Gelenke integraler Bestandteil des 3-Wege-Stücks sein. Bei einer Herstellung der Gießharke und/oder des 3-Wege-Stücks mittels beispielsweise einer Spritzgusstechnik kann das Gelenk so in vorteilhafter Weise als Formbestandteil der Gießharken bzw. des 3-Wege-Stücks vorgesehen sein und die Gießharken bzw. das 3-Wege-Stück sowie das Gelenkelement können gemeinsam spritzgegossen werden. Dabei kann als Material zur Herstellung der Gießharke sowohl ein geeigneter Kunststoff wie auch ein geeignetes Metall oder eine geeignete Legierung eingesetzt werden.

In einer weiter bevorzugten Ausgestaltung der Vorrichtung ist vorgesehen, dass die Austrittsöffnungen durch Austrittsrohre gebildet sind, wobei vorzugsweise die Länge der Austrittsrohre mit zunehmendem Abstand zur Einspeisestelle des Reaktionsgemisches von der Zuführung in den rohrförmigen Hohlkörper abnimmt. Damit wird erreicht, dass aus jedem am rohrförmigen Hohlkörper angeordneten Austrittsrohr etwa der gleiche Massenstrom an Reaktionsgemisch austritt. Ebenso ist es möglich, dass die Gießharken einen breiteren Strömungsquerschnitt aufweisen und die unterschiedlichen Längen der Austrittsrohre werden durch verschieden lange Bohrungen durch das Profil der Austrittsrohre hindurch gebildet. Ebenso kann vorgesehen sein, dass verschieden lange Auslässe direkt bei der Fertigung der Gießharken, beispielsweise mittels Spritzgusstechniken, vorgesehen werden.

Gemäß einer weiteren Ausgestaltung der Erfindung kann der Innendurchmesser des rohrförmigen Hohlkörpers von der Zuführung in Richtung des Endes der Gießharke abnehmen. Hierdurch kann ebenfalls in vorteilhafter Weise die Gleichmäßigkeit des Austritts des schäumenden Reaktionsgemisches erhöht und damit die Gleichmäßigkeit der Auftragung des Reaktionsgemisches auf die Deckschicht verbessert werden.

In einer Ausgestaltung der Erfindung kann der Mischkopf über mindestens zwei Eingänge für Komponenten des schäumenden Reaktionsgemisches und einen Ausgang, der fluidisch mit der Gießharke verbunden ist, verfügen. So kann es beispielsweise vorgesehen sein, dass über einen Eingang eine geeignete Polyol-Komponente und über einen weiteren Eingang eine geeignete Isocyanat-Komponente dem Mischkopf zugeführt werden, welche dann im Mischkopf zu einem schäumenden Reaktionsgemisch gemischt werden und die Mischung die über die Gießharke auf die Deckschicht aufgetragen wird.

Das schäumende Reaktionsgemisch kann beispielsweise eine gegenüber Polyisocyanaten reaktive Verbindung und ein Polyisocyanat enthalten. Geeignete gegenüber Isocyanaten reaktive Verbindungen sind insbesondere Polyole, Polyamine, Polyaminoalkohole und Polythiophene.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3-mercaptopropionat) und 1,2-Bis((2-mercaptoethyl)thio)-3-mercaptopropan.

Vorzugsweise ist das Polyol ausgewählt aus der Gruppe umfassend Polyetherpolyole, Polyesterpolyole, Polycarbonatpolyole, Polyetheresterpolyole, und/oder Polyacrylatpolyole und wobei weiterhin die OH-Zahl des Polyols ≥ 100 mg KOH/g bis ≤ 800 mg KOH/g, besonders bevorzugt ≥ 350 mg KOH/g bis ≤ 650 mg KOH/g, und die durchschnittliche OH-Funktionalität der Polyole ≥ 2 beträgt.

Verwendbare Polyole können beispielsweise ein zahlenmittleres Molekulargewicht Mₙ von ≥ 60 g/mol bis ≤ 8000 g/mol, bevorzugt von ≥ 90 g/mol bis ≤ 5000 g/mol und mehr bevorzugt von ≥ 92 g/mol bis ≥ 1000 g/mol aufweisen. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist ≥ 2, beispielsweise in einem Bereich von ≥ 2 bis ≤ 6, vorzugsweise von ≥ 2,1 bis ≤ 4 und mehr bevorzugt von ≥ 2,2 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylendetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole können Polyetherpolyole eingesetzt werden, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten. Polyetheresterpolyole können durch die Reaktion von Polycarbonsäureanhydriden mit Diolen und anschließende Alkoxylieren dieser erhaltenen Verbindungen erhalten werden.

Startermoleküle sind zum Beispiel Diole mit primären OH-Gruppen und zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 18 g/mol bis ≤ 400 g/mol oder von ≥ 62 g/mol bis ≤ 200 g/mol. Bevorzugt ist Glycerin.

Polyacrylatpolyole können durch radikalische Polymerisation von Hydroxylgruppen aufweisenden, olefinisch ungesättigte Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Beispiele von geeigneten Polyisocyanaten sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4-und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe (polymeres MDI, pMDI), 1,3-und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Besonders bevorzugt ist eine Mischung aus MDI und pMDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass im Reaktionsgemisch die Anzahl der NCO-Gruppen im Isocyanat und die Anzahl der gegenüber Isocyanaten reaktiven Gruppen in einem Zahlenverhältnis von ≥ 70:100 bis ≤ 500:100 zueinander stehen. Diese Kenngröße kann auch in einem Bereich von ≥ 180:100 bis ≤ 330:100 oder aber auch von ≥ 90:100 bis ≤ 140:100 liegen.

Das schäumende Reaktionsgemisch kann beispielsweise auch Acrylamid, Epoxide und/oder Phenol, Melamin und/oder Harnstoff-Formaldehyd umfassen. Hierbei können Polyacrylamid, Epoxy-Schäume-, Phenolharz-Schäume, Melaminharz-Schäume oder Hamstoff-Schäume erhalten werden.

Gemäß einer weiteren Ausgestaltung der erfindungsgemäßen Vorrichtung sind die Austrittsöffnungen der Gießharken in einem Winkel von ≥ 5° zur orthogonal zur Ebene der Deckschicht stehenden Achse ausgerichtet. Hierdurch kann die Geschwindigkeit, mit der das schäumende Reaktionsgemisch auf die unter den Gießharken bewegte Deckschicht auftrifft, verringert werden, wodurch in vorteilhafter Weise eine gleichmäßigere Auftragung der Mischung auf die Deckschicht erreicht werden kann. Die Austrittsöffnungen können auch entgegen der Relativbewegung zwischen der Deckschicht und den Gießharken ausgerichtet sein. Hierdurch wird die Breite der Aufprallzone des schäumenden Reaktionsgemisches auf die Deckschicht vergrößert, so dass die Stränge des schäumenden Reaktionsgemisches schneller zusammenfließen, was bei hohen Produktionsgeschwindigkeiten vorteilhaft ist.

Besonders bevorzugt sind die Austrittsöffnungen der Gießharken in einem Winkel von ≥ 5° und vorzugsweise in einem Austrittswinkel von 5° und 30° zur orthogonal zur Ebene der Deckschicht stehenden Achse ausgerichtet. Durch die fluidische Anbindung der Gießharken und das 3-Wege-Stück unter Ausbildung eines Kugelgelenks, sowie den sich daraus ergebenen Freiheitsgrad auch um die Längsachse der Gießharken ist eine solche Ausrichtung der Austrittsöffnungen relativ zur Deckschichtebene in einfacher Weise möglich. Hierdurch kann ein optimiertes Auftreffen des schäumenden Reaktionsgemisches auf die Deckschicht erreicht werden. Die Gelenke können auch derart ausgebildet sein, dass die Gießharken direkt am Mischkopf gelenkig angeordnet sind, sodass ein 3-Wege-Stück nicht zwingend erforderlich ist bzw. das 3-Wege-Stück kann mit dem Mischkopf beispielsweise auch integriert ausgeführt sein.

Darüber hinaus betrifft die Erfindung auch ein Verfahren zur Herstellung eines Verbundelementes, wobei ein aufschäumendes Reaktionsgemisch mittels einer Vorrichtung der oben beschriebenen Art auf eine bewegte Deckschicht aufgebracht wird.

### BEVORZUGTES AUSFÜHRUNGSBEISPIEL DER ERFINDUNG

Die Erfindung wird nachfolgen anhand von Figuren weiter erläutert.
- Fig. 1: zeigt eine schematische Ansicht einer erfindungsgemäßen Vorrichtung zur Herstellung eines Verbundelementes;
- Fig. 2: zeigt eine schematische Detailansicht eines 3-Wege-Stückes für eine erfindungsgemäße Vorrichtung;
- Fig. 3: zeigt eine schematische Detailansicht einer weiteren Ausgestaltung eines 3-Wege-Stückes für eine erfindungsgemäße Vorrichtung und
- Fig. 4: zeigt schematisch die gemäß einer Ausgestaltung der Erfindung in einem Austrittswinkel angeordneten Austrittsöffnungen.

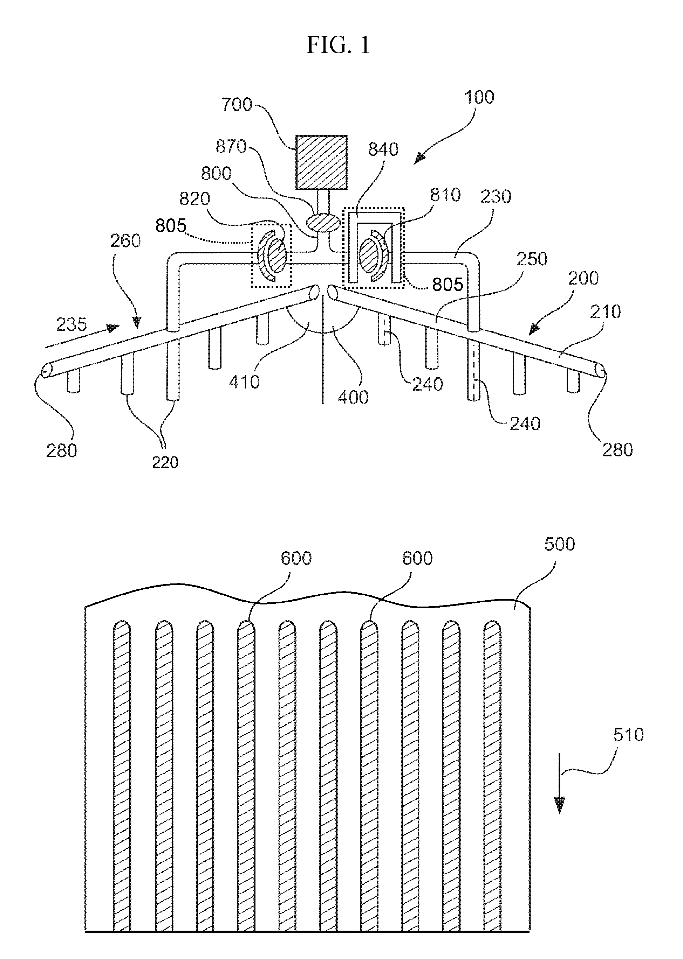

Fig.1 zeigt eine Vorrichtung 100 zum Auftragen eines aufschäumenden Reaktionsgemisches 600 auf eine beweglich angeordnete Deckschicht 500. Die Vorrichtung 100 umfasst in der gezeigten Ausgestaltung zwei Gießharken 200, 260 mit jeweils einem rohrförmigen Hohlkörper 210. Der rohrförmige Hohlkörper 210 weist eine Mehrzahl von als Austrittsrohre 220 ausgeführte Austrittsöffnungen 220 zum Austritt des aufschäumendes Reaktionsgemisches 600 auf. Die Gießharken 200, 260 sind in betragsgleichen Winkeln 400, 410 ≤ 80° zur Bewegungsrichtung 510 der Deckschicht 500 angeordnet. Die Gießharken 200, 260 weisen jeweils eine Zuführung 230 für das aufschäumende Reaktionsgemisch 600 in den rohrförmigen Hohlkörper 210 auf. Die Zuführungen 230 sind fluidisch über ein 3-Wege-Stück 800 mit einem Mischkopf 700 verbunden. Das 3-Wege-Stück 800 ist an den Verbindungsstellen zu den Zuführungen 230 in der Form eines Kugelgelenkkopfes 820 ausgebildet, während die Zuführungen 230 an den Verbindungsstellen zum 3-Wege-Stück 800 in der Form von Kugelgelenkspfannen 810 ausgebildet sind, so dass Kugelgelenkskopf 820 und Kugelgelenkspfanne 810 bei funktionsgemäßer Montage ein mit einem Fluid durchströmbares Kugelgelenk 805 ausbilden. Alternativ kann es vorgesehen sein, dass der Kugelgelenkskopf 820 am 3-Wege-Stück 800 ausgebildet ist, während die Kugelgelenkspfannen 810 an den Zuführungen 230 angeformt sind.

An den Mischkopf 700 ist das 3-Wege-Stück 800 mittels einer Gewindeverbindung 870 fluidisch angebunden. Alternativ kann vorgesehen sein, dass das 3-Wege-Stück 800 mit dem Mischkopf 700 ebenfalls über ein Kugelgelenk 805 verbunden wird, wodurch sich weitere Freiheitsgrade bei der Ausrichtung der Gießharken 200, 260 relativ zur Deckschicht 500 ergeben. Zur Fixierung der Kugelgelenke 805 sind Kupplungselemente 840 vorgesehen, welche den Kugelgelenkskopf 820 mittels der ausgeübten Klemmkraft in die Kugelgelenkspfanne 810 drücken, so dass eine lösbare dichte Verbindung ausgebildet wird. Die Länge 240 zwischen der Mittelachse 250 des rohrförmigen Hohlkörpers 210 und den Austrittsöffnungen 220 nimmt von der Zuführung 230 in Richtung des Endes 280 der Gießharken 200, 260 ab. Das schäumende Reaktionsgemisch 600 wird den Gießharken 200, 260 aus einem Mischkopf 700 über die Zuführungen 230 zugeführt und tritt über die Austrittsöffnungen 220 aus, von wo sie auf die Deckschicht 500 gelangt und dort zur Ausbildung eines Schaumstoffes aufquillt und aushärtet.

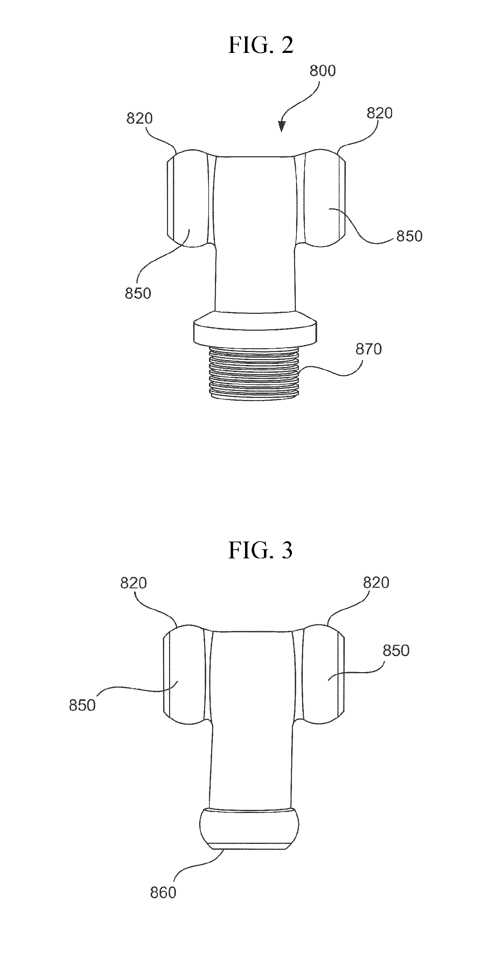

Fig. 2 zeigt eine schematische Detailansicht eines 3-Wege-Stückes 800 für eine erfindungsgemäße Vorrichtung 100. Das 3-Wege-Stück 800 weist an den Verbindungsstellen zu den Zuführungen der Gießharken 200, 260 jeweils Formelemente auf, die als Kugelgelenksköpfe 820 ausgebildet sind. Die Kugelgelenksköpfe 820 können in dem Kontaktbereich, in welchem sie mit den an den Zuführungen der Gießharken ausgebildeten Kugelgelenkspfannen 810 in Kontakt treten, Dichtflächen 850 aufweisen, um die Dichtigkeit des sich ausbildenden Kugelgelenks 805 gegenüber dem durch dieses strömenden und schäumenden Reaktionsgemisches 600 zu erhöhen. Die Dichtflächen 850 können dabei aus geeigneten Dichtmaterialien ausgebildet sein. Zum fluidischen Anschluss des 3-Wege-Stückes 800 an den Mischkopf 700 weist dieses einen Gewindeverbindung 870 auf.

Fig. 3 zeigt eine schematische Detailansicht einer weiteren Ausgestaltung eines 3-Wege-Stückes 800 für eine erfindungsgemäße Vorrichtung 100. Das 3-Wege-Element 800 weist an den Verbindungsstellen zu den Zuführungen der Gießharken jeweils Formelemente auf, die als Kugelgelenksköpfe 820 ausgebildet sind. Die Kugelgelenksköpfe können in dem Kontaktbereich, in welchem sie mit den an den Zuführungen der Gießharken ausgebildeten Kugelgelenkspfannen 810 in Kontakt treten, Dichtflächen 850 aufweisen, um die Dichtigkeit des sich ausbildenden Kugelgelenks 805 gegenüber dem durch dasselbe strömenden schäumenden Reaktionsgemisches zu erhöhen. Die Dichtflächen 850 können dabei aus geeigneten Dichtmaterialien ausgebildet sein. Zum fluidischen Anschluss des 3-Wege-Stückes 800 an den Mischkopf 700 weist dieses einen weiteren Kugelgelenkskopf 820 zur Ausbildung eines Kugelgelenks 860 auf, welches in identischer Weise zu den Verbindungen mit den Zuführungen der Gießharken ausgebildet ist.

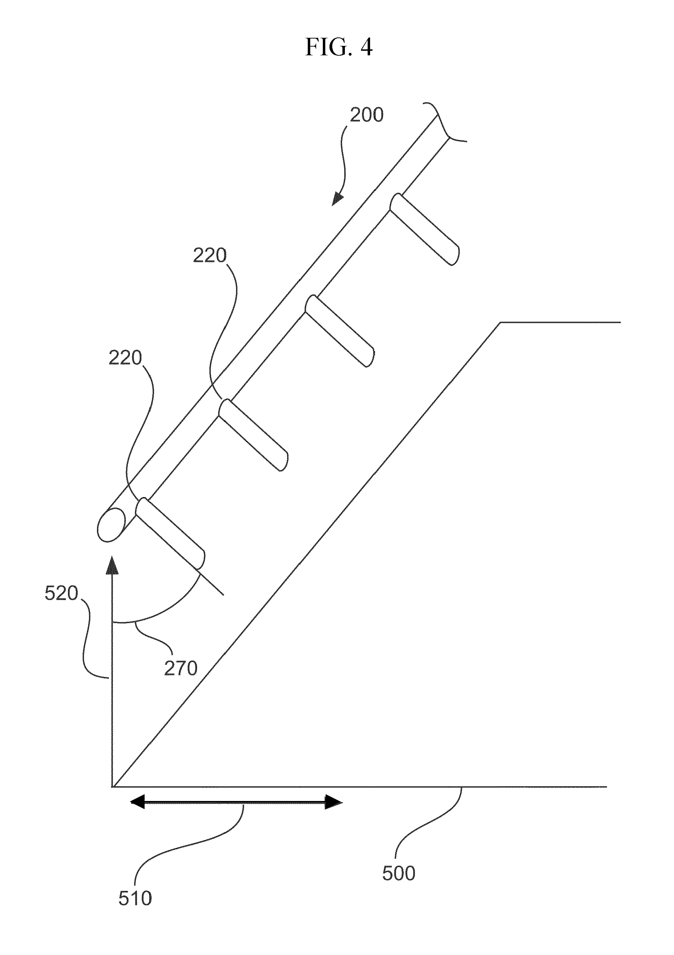

Fig. 4 zeigt schematisch die gemäß einer Ausgestaltung der Erfindung in einem Austrittswinkel 270 angeordneten Austrittsöffnungen 220. Die Austrittsöffnungen 220 sind dabei in einem Winkel 270 zur orthogonal zur Ebene der Deckschicht 500 stehenden Achse 520 angeordnet. Die Anwinkelung erfolgt dabei in der Art, dass die Austrittöffnungen 220 in Richtung der Bewegungsrichtung 510 der beweglich angeordneten Deckschicht 500 ausgerichtet sind. Hierdurch verringert sich die Auftreffgeschwindigkeit des Reaktionsgemisches 600 auf die Deckschicht 500, wodurch ein gleichmäßigeres Aufquellen des schäumenden Reaktionsgemisches erreicht werden kann. Dies ist besonders vorteilhaft für die Verteilung von großen Reaktionsgemischmengen. Die Austrittsöffnungen 220 können auch entgegen der Bewegungsrichtung 510 der beweglich angeordneten Deckschicht 500 ausgerichtet sein. Hierdurch wird die Breite der Aufprallzone des schäumenden Reaktionsgemisches 600 vergrößert, so dass die Stränge des schäumenden Reaktionsgemisches 600 schneller zusammenfließen. Die ist insbesondere vorteilhaft für die Verteilung von niedrigen Mengen an schäumenden Reaktionsgemisch 600 und/oder bei hohen Produktionsgeschwindigkeiten.

### Bezugszeichenliste

- 100: Vorrichtung
- 200: Gießharke
- 210: rohrförmiger Hohlkörper
- 220: Austrittsöffnung, Austrittsrohr
- 230: Zuführung
- 235: Längserstreckung Gießharke
- 240: Länge Auslass
- 250: Mittelachse rohrförmiger Hohlkörper
- 260: zweite Gießharke
- 270: Austrittswinkel
- 280: Ende der Gießharke
- 400: Winkel
- 410: Winkel
- 500: Deckschicht
- 510: Längsachse, Bewegungsrichtung
- 520: orthogonale Achse
- 600: aufschäumendes Reaktionsgemisch
- 700: Aufnahmeelement, Mischkopf
- 800: 3-Wege-Stück
- 805: Gelenk, Kugelgelenk
- 810: Kugelgelenkspfanne
- 820: Kugelgelenkskopf
- 840: Kupplungselement
- 850: Dichtfläche
- 860: Kugelgelenk
- 870: Gewindeverbindung

## Patentansprüche

1. Vorrichtung (100) zum Auftragen eines aufschäumenden Reaktionsgemisches (600) auf eine Deckschicht (500), insbesondere zur Herstellung eines Verbundelementes, mindestens umfassend zwei Gießharken (200, 260) mit jeweils einem rohrförmigen Hohlkörper (210), welcher Hohlkörper (210) sich entlang einer Mittelachse (250) erstreckt und wenigstens zwei Austrittsöffnungen (220) zum Austritt des aufschäumenden Reaktionsgemisches (600) aufweist, wobei die Gießharken (200, 260) und die Deckschicht (500) in einer Längsachse (510) relativ zueinander bewegbar sind und wobei die Gießharken (200, 260) an einem Aufnahmeelement (700) angeordnet sind,
**dadurch gekennzeichnet, dass** die Anordnung der Gießharken (200, 260) am Aufnahmeelement (700) jeweils ein Gelenk (805) aufweist, mittels dem die Gießharken (200, 260) beweglich am Aufnahmeelement (700) angeordnet sind und in einem Winkel (400, 410) von ≤ 80° zur Längsachse (510) der Bewegung ausrichtbar sind.

2. Vorrichtung nach Anspruch 1, wobei
- das Aufnahmeelement (700) durch einen Mischkopf (700) und insbesondere ein 3-Wege-Stück (800) gebildet ist, wobei im Mischkopf (700) wenigstens zwei Komponenten zur Bildung des aufschäumenden Reaktionsgemisches (600) zusammenführbar sind, und wobei
- das Gelenk (805) insbesondere als Kugelgelenk (805) zwischen dem 3-Wege-Stück (800) und den Gießharken (200, 260) ausgebildet ist,
- derart, dass die Gießharken (200, 260) mechanisch bewegbar über das 3-Wege-Stück (800) am Mischkopf (700) angeordnet und fluidisch mit dem Mischkopf (700) verbunden sind.

3. Vorrichtung nach Anspruch 2, wobei die Gießharken (200, 260) eine Zuführung (230) aufweisen, welche Zuführungen (230) jeweils einen Teil des Kugelgelenkes (805), insbesondere eine Kugelgelenkspfanne (810), aufweisen, und wobei am 3-Wege-Stück (800) mit der Kugelgelenkspfanne (810) korrespondierende Kugelgelenksköpfe (820) ausgebildet sind.

4. Vorrichtung nach Anspruch 2, wobei die Zuführungen (230) jeweils ein Kugelgelenkskopf (820) des Kugelgelenkes (805) aufweisen, und wobei am 3-Wege-Stück (800) mit dem Kugelgelenkskopf (820) korrespondierende Kugelgelenkspfannen (810) ausgebildet sind.

5. Vorrichtung nach einem der vorgenannten Ansprüche, wobei die Mittelachsen (250) der Gießharken (200, 260) über die Gelenke (805) in einem Winkel (400, 410) zwischen 60° und 80° zur Längsachse (510) der Bewegung ausrichtbar sind.

6. Vorrichtung einem der Ansprüche 3 bis 5, wobei die Kugelgelenkspfanne (810) und der Kugelgelenkskopf (820) über ein Kupplungselement (840) fluiddicht lösbar miteinander verbunden sind, welches Kupplungselement (840) vorzugsweise eine Schraubklammer oder eine Federklammer ist.

7. Vorrichtung nach einem der Ansprüche 3 bis 6, wobei die Kugelgelenkspfanne (810) und/oder der Kugelgelenkskopf (820) eine Dichtfläche (850) aufweisen, welche Dichtfläche (850) eine fluiddichte Verbindung zwischen Kugelgelenkspfanne (810) und Kugelgelenkskopf (820) schafft.

8. Vorrichtung nach einem der vorgenannten Ansprüche, wobei die Austrittsöffnungen (220) durch Austrittsrohre (220) gebildet sind, die in einem Austrittswinkel (270) von ≥ 5°, vorzugsweise in einem Austrittswinkel (270) von ≥ 5° und ≤ 30°, zur orthogonalen Achse (520) ausgerichtet sind.

9. Verfahren zur Herstellung eines Verbundelementes, wobei ein aufschäumendes Reaktionsgemisch (600) mittels einer Vorrichtung (100) nach einem der Ansprüche 1 bis 9 auf eine bewegte Deckschicht (500) aufgebracht wird.

10. Verfahren nach Anspruch 9, wobei das aufschäumende Reaktionsgemisch (600) eine Isocyanat - reaktive Komponente und eine Isocyanatkomponente aufweist.

11. Verfahren nach Anspruch 9 oder 10, wobei die Deckschicht aus einem Metall, einem Kunststoff, einem glasfaserhaltigen, einem mineralfaserhaltigen und/oder einem cellulosehaltigen Werkstoff besteht.

12. Verwendung einer Vorrichtung (100) nach einem der Ansprüche 1 bis 8 zur Herstellung eines PUR/PIR - Schaum haltigen Verbundelementes.
